# EUROPÄISCHE PATENTSCHRIFT

(11) **EP 0 396 027 B1**
(45) Veröffentlichungstag und Bekanntmachung des Hinweises auf die Patenterteilung: **12.10.1994**
(21) Anmeldenummer: 90107980.6
(22) Anmeldetag: 26.04.1990
(51) Int. Cl.: C08L 21/00

(54) **Verwendung von Polymeren, die von 4-Hydroxy- oder 4-Acetoxystyrol abgeleitete Einheiten enthalten als Verstärkerharze und Haftungspromotoren in Kautschukmischungen**
Use of polymers containing units derived from 4-hydroxystyrene or 4-acetoxystyrene as reinforcing resins and bonding promotors in rubber compositions
Utilisation de polymères, contenant des unités dérivés de 4-hydroxystyrène ou 4-acétoxystyrène, comme résines de renforcement ou promoteurs d'adhésion dans des compositions de caoutchouc

(30) Priorität: 29.04.1989 DE 3914388
(43) Veröffentlichungstag der Anmeldung: 07.11.1990
(73) Patentinhaber: HOECHST AKTIENGESELLSCHAFT, 65926 Frankfurt am Main (DE)
(72) Erfinder: Bender, Albert, Dr., D-6500 Mainz (DE); Leicht, Erhard, Dr., D-6238 Hofheim am Taunus (DE); Sattelmeyer, Richard, Dr., D-6200 Wiesbaden (DE)

(56) Entgegenhaltungen:
- FR-A- 2 352 842
- PATENT ABSTRACTS OF JAPAN, Band 6, Nr. 35 (C-93)[913], 3. März 1982; & JP-A-56 152 852

## Beschreibung

Es ist bekannt, Mischungen von Natur- oder Synthesekautschuk zur Verbesserung ihrer mechanischen Eigenschaften, insbesondere der Härte und der Spannungswerte, Verstärkerharze zuzusetzen. Zur Verbesserung der Haftung von Kautschukvulkanisaten an Stahlcord, speziell an vermessingtem oder verzinktem Stahlcord, verwendet man Haftungspromotoren. Für diese Zwecke dienen vernetzbare Phenolharze, im allgemeinen Novolake, und Resorcin oder Resorcinvorkondensate in Verbindung mit Formaldehyd abspaltenden Substanzen oder mit Substanzen, die mit den Phenolharzen, Resorcin oder den Resorcinvorkondensaten über Methylen- oder Methylolgruppen unter Vernetzung reagieren, beispielsweise Hexamethylentetramin und Methylolgruppen enthaltende oder bildende, ggf. teil- oder vollveretherte Melamin- und Harnstoffharze. Basis der Kautschukmischungen können Naturkautschuk oder die bekannten Synthesekautschuke sein. Die Verstärkerharze und Haftungspromotoren werden bei erhöhter Temperatur in die Kautschukmischungen eingemischt. Da die Vorkondensate stets freies Phenol bzw. Resorcin enthalten, müssen dabei aufwendige Vorkehrungen getroffen werden, damit diese Phenolkörper nicht in die Umwelt gelangen. Beim Einsatz von freiem Resorcin gilt das in verstärktem Maße. Außerdem enthalten Resorcinvorkondensate wegen ihrer Hygroskopizität meist Wasser. Das erschwert das Einarbeiten in die Kautschukmischung und verschlechtert die Eigenschaften des daraus hergestellten Vulkanisats.

In Patent Abstracts of Japan, Vol 6, No. 35(C-93) [913], (1982) werden Systeme aus p-Hydroxystyrol-Homopolymeren und Cobaltcarboxylaten als zur Härtung von Kautschukmischungen geeignet beschrieben. p-Hydroxystyrol-Homopolymere weisen Erweichungspunkte oberhalb von 160 ° C auf und können daher nur bei sehr hohen Temperaturen in Kautschuk eingearbeitet werden. Die Herstellung von Copolymerisaten mit Hydroxystyrol-Einheiten ist aus FR-A.2 352 842 bekannt.

Ziel der Erfindung war es daher, Verstärkerharze und Haftungspromotoren für Kautschukmischungen zur Verfügung zu stellen, die bei mindestens gleich guter Wirkung keine Phenolkörper an die Umwelt abgeben und sich gut in Kautschukmischungen einarbeiten lassen.

Es wurde nun gefunden, daß sich als Verstärkerharze und Haftungspromotoren für Kautschukmischungen Polymere eignen, die Einheiten enthalten, die sich von, ggf. am Kern substituiertem, 4-Acetoxystyrol oder 4-Hydroxystyrol ableiten, was im folgenden näher erläutert wird.

Polymerisate, die solche Einheiten enthalten, sind aus der europäischen Patentschrift 277 721 bekannt. Sie werden danach erhalten durch radikalische Polymerisation von 4-Acetoxystyrol, ggf. in Mischung mit anderen polymerisierbaren Monomeren, in wäßrigem Medium. Die entsprechenden 4-Hydroxystyrolpolymerisate erhält man daraus durch Verseifung. Für die Zwecke der Erfindung sind die so erhaltenen Polymerisate brauchbar. Es ist allerdings schwierig, sie salz- und emulgatorfrei zu erhalten, weshalb für den vorliegenden Zweck der radikalischen oder thermischen Polymerisation in organischen Lösemitteln der Vorzug gegeben wird.

Die gemäß der Erfindung zu verwendenden Polymeren enthalten Einheiten der Formel (I) 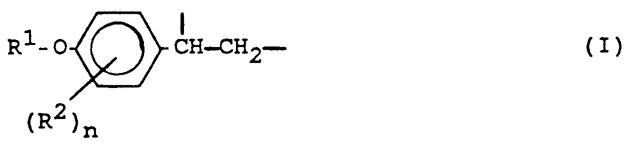
Die Symbole haben folgende Bedeutung:
- R¹: ist Wasserstoff oder CH₃CO-, wobei
- R¹: nicht in allen Einheiten der Formel (I) Wasserstoff ist,
- R²: ist Wasserstoff oder eine Alkyl- oder Alkoxygruppe mit 1 bis 4 C-Atomen oder Halogen oder -C≡N und
- n: ist eine ganze Zahl von 1 bis 4 mit der Maßgabe, daß für den Fall, daß n> 1 ist, die Reste R² gleich oder verschieden sein können, und daß mindestens bei einem Teil der Einheiten der Formel (I) mindestens in einer der zu der R¹-O-Gruppe vicinalen Stellungen ein Wasserstoffatom steht,
und die Kautschukmischungen zusätzlich eine wirksame Menge eines Härtungsmittels zur Vernetzung der die Formel-I-Einheiten enthaltenden Polymeren bei der Kautschukvulkanisation enthalten.

In bevorzugten Ausführungsformen sind Einheiten der Formel (I) mit R¹ = CH₃CO- und Einheiten der Formel (I) mit R¹ = Wasserstoff enthalten, R² ist Wasserstoff und somit n = 4. Polymere, bei denen R¹ ausschließlich für Acetyl steht, reagieren relativ träge mit den oben für die bekannten Phenol- und Resorcinharze genannten Vernetzern, während die reinen 4-Hydroxy-Verbindungen in ihrer Reaktivität mit den bekannten Verstärkerharzen vergleichbar sind. Durch den Grad der Verseifung kann die Reaktivität gezielt beeinflußt werden.

Die Eigenschaften der erfindungsgemäß zu verwendenden Polymerisate lassen sich bei ihrer Herstellung außer durch den Grad der Verseifung auch durch Copolymerisation unter Mitverwendung von Comonomeren der allgemeinen Formel (II) 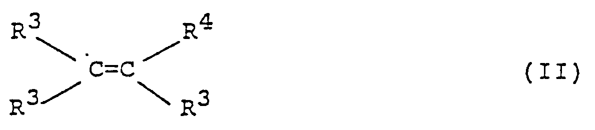
modifizieren, in der die Symbole folgende Bedeutung haben:
- R³: sind gleiche oder verschiedene Reste aus der Gruppe Wasserstoff oder eine Alkyl- oder Alkoxygruppe mit 1 bis 4 C-Atomen oder Halogen oder -C≡N oder -COOH oder -COO(C₁-C₄-Alkyl) oder 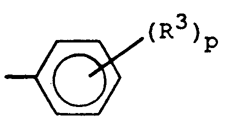 wobei p eine ganze Zahl von 1 bis 5 ist,
und
- R⁴: = R³ oder eine Gruppe

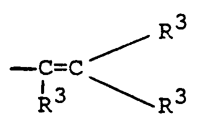

Monomere der Formel (II) sind Olefine, konjugierte Diene, Styrol und Styrolderivate, beispielsweise Ethylen, Vinylchlorid, 1,3-Butadien, 2-Methyl-1,3-butadien(Isopren), 5,5-Dimethyl-1,3-hexadien, 2-Chlor-1,3-butadien(Chloropren), 1-Phenyl-1,3-butadien, 1-Cyan-1,3-butadien, Styrol und Alphamethylstyrol. Bevorzugt ist Styrol und besonders bevorzugt sind Butadien, Isopren und Chloropren, von den letzteren insbesondere Butadien. Der Einbau von Einheiten, die sich von den 1,3-Dienen ableiten, führt dazu, daß das Polymer bei der Vulkanisation in das Vulkanisat einvulkanisiert wird.

Als Comonomere eignen sich ferner sehr gut Cyclopentadien und Dicyclopentadien, die besonders leicht mit 4-Acetoxystyrol copolymerisieren.

Durch die Mitverwendung von Comonomeren läßt sich die Vernetzungsdichte der Polymerisate bei der Umsetzung mit Vernetzern regulieren. Die Menge der eingesetzten Comonomeren soll jedoch höchstens die dreifache molare Menge und vorzugsweise nicht mehr als die gleiche molare Menge des 4-Acetoxystyrols sein.

Das Molekulargewicht Mw der Polymeren soll zwischen etwa 1000 und etwa 150000 liegen. Wird ein Molekulargewicht von ca. 150000 überschritten, so erhält man, insbesondere wenn 1,3-Diene als Comonomere verwendet werden, klebrige Produkte, die sich schwer handhaben lassen. Bei sehr hohem Anteil an 1,3-Dienen können auch Produkte niedrigeren Molekulargewichts klebrig sein.

Wie bereits ausgeführt, können die Polymeren bzw. Copolymeren durch Polymerisation in wäßrigem Medium hergestellt werden.

Vorzugsweise polymerisiert man jedoch in organischen Lösungsmitteln wie Isooctan, Dodecan, Benzol, Toluol, Xylol, Cumol, Methylethylketon, Methylisobutylketon, Diisoamylketon, Essigsäureethylester, Propanol oder Butanol. Bevorzugte Lösungsmittel für die Polymerisation sind Toluol, Xylol oder Cumol.

Die Polymerisation kann thermisch oder radikalisch durchgeführt werden. Im allgemeinen verläuft die radikalische Polymerisation bei niedrigeren Temperaturen und damit bei niedrigerem Druck. Als Radikalbildner verwendet man die bekannten organischen Peroxide oder Azoverbindungen wie Dibenzoylperoxid, Di-ter.-butylperoxid, Dilauroylperoxid, Cumolhydroperoxid, tert.-Butylhydroperoxid und Azodiisobutyronitril, vorzugsweise Di-tert.-butylperoxid, in Mengen bis zu etwa 5 Gew.-%, vorzugsweise bis zu 2 Gew.-%, bezogen auf das Gesamtgewicht der Monomeren.

Die Temperatur bei der radikalischen Polymerisation liegt im allgemeinen bei 80 - 220°C. Der Druck ist von der Temperatur und von der Art des verwendeten Lösemittels abhängig. Bei thermischer Polymerisation können deutlich höhere Temperaturen erforderlich sein.

Bei der Polymerisation kann man so verfahren, daß man die Gesamtmenge an Monomeren und Katalysator in einem geeigneten Lösemittel vorlegt und erwärmt, bis die Reaktion anspringt. Ebenso kann man das Lösemittel alleine vorlegen, auf eine zum Starten der Reaktion geeignete Temperatur vorheizen und Monomere und Katalysator zudosieren. Es sind alle aus der Technik der Lösungspolymerisation bekannten Verfahren anwendbar.

Zur Einstellung des Molekulargewichts verwendet man die bekannten Regler, insbesondere Schwefelverbindungen wie Thioalkohole, insbesondere Merkaptoethanol oder 1-Dodekanthiol, Thiosäuren wie Merkaptoessigsäure, oder Disulfide wie Xanthogendisulfide. Bevorzugt ist 1-Dodekanthiol in Mengen von bis zu 3 Gew.-%, bezogen auf die Gesamtmenge an Monomeren.

Nach Beendigung der Polymerisation kann das Polymerisat durch Abdestillieren des Lösungsmittels als Festharz gewonnen werden. Es kann ohne weitere Reinigung für die erfindungsgemäße Anwendung eingesetzt werden.

Die Reaktivität gegenüber Methylenspendern wie Hexamethylentetramin und gegenüber Melamin- oder Harnstoffharzen wird erheblich höher, wenn man die im Polymeren enthaltenen 4-Acetyloxy-styrol-Einheiten ganz oder teilweise zu 4-Hydroxy-styrol-Einheiten verseift, wodurch man Polymere erhält, die die Struktur eines polymeren Phenols aufweisen.

Zur Verseifung kann man unmittelbar die bei der Polymerisation erhaltene Lösung mit einer wäßrigen Lösung oder Suspension einer Base, z.B. Natrium-, Kalium-, Calcium- oder Aluminiumhydroxid oder auch Ammoniak versetzen und die Verseifung je nach Lösemittel in homogener oder heterogener Phase durchführen. Ebenso kann man zunächst durch Entfernen des Lösemittels das Polymere gewinnen und dieses in wäßriger Phase verseifen. Die verseiften Polymeren sind meistens in wäßrigen Basen löslich und können durch Ansäuern mit einer starken Säure ausgefällt werden. Das Präzipitat wird abfiltriert und sorgfältig gewaschen und getrocknet.

Besonders günstig ist es jedoch, die Polymerisation in einem nicht mit Wasser mischbaren Lösemittel wie Toluol, Xylol oder Cumol durchzuführen, die Verseifung mit wäßriger Base in heterogener Phase vorzunehmen und wäßrige und organische Phase vor dem Ansäuern zu trennen.

Die Polymeren werden anstelle von bekannten Verstärkerharzen und Haftungspromotoren in den bekannten Natur- und Synthesekautschukmischungen eingesetzt, die für die Herstellung von Fahrzeugreifen und von technischen Gummiartikeln verwendet werden.

Als Vernetzer verwendet man dieselben Verbindungen wie bei den bekannten Phenol- und Resorcinharzen. Vorzugsweise werden Hexamethylentetramin und Melaminharze, insbesondere Hexamethoxymethylmelamin, eingesetzt. Die für den jeweiligen Zweck geeignete Menge an Vernetzer muß in einfach durchzuführenden Vorversuchen festgelegt werden. Sie kann z.B. 2-60 Gew.-%, bezogen auf das Gewicht des eingesetzten Polymerisats, betragen.

Die Kautschukmischungen können die in der einschlägigen Industrie üblichen und bekannten Zusatz-, Füll- und Hilfsstoffe enthalten und in üblicher Weise verarbeitet werden.

Die nachstehenden Beispiele dienen zur Erläuterung der Erfindung ohne diese einzuschränken.

### Beispiel 1

In einem 3 ltr.-Autoklaven werden 1080 g Xylol, 10,8 g Di-tert-butylperoxid und 810 g p-Acetoxystyrol (5 Mol) vorgelegt. Dazu werden 135 g (2,5 Mol) Butadien bei Raumtemperatur zugepumpt. Dann wird innerhalb von 1 Std. auf 140°C erhitzt. Nach vierstündigem Halten bei 140°C ist der anfangs auf 8 bar gestiegene Druck auf 3,4 bar abgesunken. Zur Beendigung der Reaktion wird anschließend noch für eine halbe Stunde auf 180°C erhitzt, wobei sich ein Druck von 4,4 bar einstellt. Man läßt abkühlen auf 140°C, entspannt und destilliert das Lösungsmittel ab, wobei die Temperatur des Reaktionsgemisches bis auf 200°C gesteigert wird. Zur Entfernung von Restlösemittel wird bei dieser Temperatur noch eine halbe Stunde bei 60 mbar evakuiert.

Nach Abkühlen wird das resultierende Copolymerisat als glasartiges Festharz in 95 %iger Ausbeute (bezogen auf eingesetzte Monomere) isoliert. Es enthält die Monomereinheiten p-Acetoxystyrol und Butadien im Molverhältnis 1:0,5, besitzt einen Schmelzpunkt von 95°C und ein mittleres Molekulargewicht (M_{w}) von 52000.

Die Beispiele 2-5 werden analog zu Beispiel 1 hergestellt:

| Beispiel | Molverhältnis Acetoxystyrol: Butadien | Schmelzpunkt °C | Ausbeute % | M_{w} |
|---|---|---|---|---|
| 2 | 1 : 0,25 | 108 | 95 | 22000 |
| 3 | 1 : 0,75 | 87 | 90 | 66000 |
| 4 | 1 : 1,0 | 80 | 87 | 380000 |
| 5 | 1 : 2,0 | 79 | 75 | 365000 |

### Beispiel 6

Es wird analog Beispiel 1 gearbeitet, jedoch mit einem Zusatz von 21,6 g (= 2 Gew.-%, bezogen auf Monomere) n-Dodecylmerkaptan als Molekulargewichtsregler. Es wird mit 100 % Ausbeute ein Copolymerisat von glasartigem Aussehen erhalten; Schmelzpunkt 68°C, mittleres Molekulargewicht (M_{w}) 19000.

Analog zu Beispiel 6 werden folgende Produkte hergestellt:

| Beispiel | Molverhältnis Acetoxystyrol: Butadien | Zusatz an Regler in Gew.-% | Ausbeute % | M_{w} |
|---|---|---|---|---|
| 7 | 1 : 1 | 1 | 95 | 49000 |
| 8 | 1 : 2 | 1 | 87 | 106000 |
| 9 | 1 : 1 | 2 | 94 | 36000 |
| 10 | 1 : 2 | 2 | 89 | 56000 |
| 11 | 1 : 3 | 2 | 92 | 260000 |

### Beispiel 12

In einem 3 ltr. Autoklaven werden 1000 g Xylol vorgelegt. In das auf 200°C erhitzte Lösungsmittel werden innerhalb 3 Stunden 1000 g p-Acetoxystyrol, welches 10 g Di-tert-butylperoxid und 20 g n-Dodecylmerkaptan enthält, zugepumpt. Man läßt noch 1 Stunde bei 200°C nachrühren und entspannt vorsichtig (der Innendruck beträgt ca. 4,5 bar), wobei das Lösungsmittel abzudestillieren beginnt. Noch flüchtige Anteile werden durch einhalbstündiges Evakuieren bis 60 mbar entfernt. Nach dem Abkühlen werden 950 g eines glasartigen Produkts mit dem Schmelzpunkt 60°C erhalten (Ausbeute: 95 %). Es besitzt ein mittleres Molekulargewicht M_{w} von 4000.

### Beispiel 13

Es werden 190 g Festharz aus Beispiel 1 verwendet. Das auf Erbsengröße zerkleinerte Produkt wird in 270 g 33 %iger Natronlauge suspendiert. Dann wird auf 90°C erwärmt, wobei das polymere Festharz sich langsam zu lösen beginnt. Nach Auflösung läßt man noch 4 Stunden bei 90°C nachrühren. Dann tropft man die auf 20°C abgekühlte Lösung in 200 ml 37 %ige Salzsäure, wobei das hydroxylgruppenhaltige Copolymerisat ausfällt. Es wird durch Abfiltrieren isoliert, mit viel Wasser säurefrei gewaschen und im Trockenschrank bei 50°C bis zur Gewichtskonstanz getrocknet. Es werden 147 g (100 % Ausbeute) eines farblosen Pulvers erhalten, das oberhalb von 100°C zu schmelzen beginnt.

### Beispiel 14

Man verfährt gemäß Beispiel 1, destilliert das Lösungsmittel jedoch nicht ab. 402 g dieser Lösung werden mit 80 g Natriumhydroxid, welches in 300 g Wasser gelöst ist, vier Stunden bei 90°C gerührt. Dann läßt man auf 20°C abkühlen und trennt die organische Phase (Xylol) ab. Die alkalische wäßrige Lösung tropft man in 490 g eiskalte 20 %ige Schwefelsäure, wobei die Temperatur nicht über 10°C steigen sollte. Das ausgefallene hydroxylgruppenhaltige Copolymerisat wird abfiltriert, mit viel Wasser salz- und säurefrei gewaschen und bei 50°C im Trockenschrank bis zur Gewichtskonstanz getrocknet. Es werden 147 g eines schwach gelbgefärbten Pulvers erhalten, das ab 100°C zu schmelzen beginnt (Ausbeute quantitativ).

### Beispiel 15

Gemäß Beispiel 3 werden 1616 g einer 50 %igen Copolymerisat-Lösung in Xylol hergestellt. Dazu gibt man 348 g Natriumhydroxid in 1410 g Wasser und erhitzt das 2-Phasen-Gemisch auf 80°C. Nach einer Stunde läßt man auf 20°C abkühlen und tropft innerhalb 2 Stunden 848 g 37 %ige Salzsäure so zu, daß die Temperatur nicht über 20°C ansteigt. Es wird abgenutscht und 2 x mit 1000 g kaltem Wasser nachgewaschen. Dann wird im Vakuumtrockenschrank bis zur Gewichtskonstanz bei 50°C getrocknet. Es werden 633 g (100 % Ausbeute) eines farblosen Pulvers vom Festpunkt 100°C erhalten.

### Beispiel 16

Gemäß Beispiel 12 werden 950 g Homopolymerisat hergestellt. Das zerkleinerte Produkt wird unter Zusatz von 200 g Xylol mit 465 g Natriumhydroxid in 1800 g Wasser auf 90°C erhitzt. Nach einer Stunde läßt man auf 20°C abkühlen und fällt das Produkt mit 1131 g 37 %iger Salzsäure aus. Es wird abgenutscht, mit Wasser säurefrei gewaschen und im Vakuumtrockenschrank bis zur Gewichtskonstanz bei 40°C getrocknet. Es werden 695 g (100 % Ausbeute) eines farblosen Pulvers vom Fp. 85°C erhalten.

### Beispiel 17

Es werden acetylgruppenhaltige Copolymere mit hohem Butadiengehalt gemäß Beispiel 4, 5, 10 und 11 hergestellt. Man verseift die Produkte gemäß Beispiel 13 oder 14. Es werden hydroxylgruppenhaltige Copolymerisate in quantitativer Ausbeute erhalten.

Die Copolymerisate sind klebrig und daher schlecht handhab-und verarbeitbar.

### Beispiel 18

In einem 3 l Autoklaven werden 400 g Xylol vorgelegt. In das auf 180°C erhitzt Lösungsmittel wird innerhalb 3 Stunden ein Gemisch aus 600 g (3,7 Mol) p-Acetoxystyrol, 200 g (1,9 Mol) Styrol, 8 g Dibenzoylperoxid, 16 g n-Dodecylmerkaptan und 200 g Xylol gepumpt. Man läßt noch 1 Stunde bei 180°C nachreagieren und entspannt vorsichtig, wobei das Lösungsmittel abzudestillieren beginnt. Noch flüchtige Anteile werden durch einhalbstündiges Evakuieren bis 60 mbar entfernt. Nach dem Abkühlen werden 802 g (99 % Ausbeute) eines glasartigen Produkts vom Fp. 76°C erhalten.

### Beispiel 19

700 g des in Beispiel 18 hergestellten Copolymerisats wurden zerkleinert und mit 200 g Xylol, 302 g Natriumhydroxid und 1220 g Wasser 1 Stunde bei 90°C erhitzt. Anschließend wurde mit 3000 g kaltem Wasser verdünnt und 370 g 37 %ige Salzsäure innerhalb einer Stunde zugetropft. Nach dem Abnutschen und Trocknen bei 50°C im Vakuum wurde ein farbloses Pulver vom Fp. 138°C erhalten.

Die im vorangegangenen Abschnitt beschriebenen Produkte wurden anschließend auf ihre Wirkung in den Gummimischungen hin geprüft. Als Ausgangsmischung diente ein Grundbatch der folgenden Zusammensetzung (GT = Gewichtsteile), von dem eine größere Menge hergestellt wurde:
100 GT Naturkautschuk
40 GT Ruß
15 GT aktive Kieselsäure
5 GT Zinkoxid
1 GT Stearinsäure
1 GT Alterungsschutzmittel
Zur Herstellung der verschiedenen Einzelmischungen wurden zum Grundbatch die jeweils zu prüfenden Produkte bei Temperaturen zwischen ca. 80 und 100°C zugemischt und danach ca. 10 Minuten bei einer Temperatur von ca. 120°C homogen verteilt. Anschließend erfolgte bei Temperaturen unter 100°C die Einmischung von 4 GT Schwefel und 0,8 GT Beschleuniger sowie des als Härtungsmittel dienenden Melaminharzes.

Nach der Vulkanisation, durchgeführt unter den bei der jeweiligen Versuchsserie angegebenen Bedingungen, wurden die erhaltenen Prüfkörper auf folgende Eigenschaften nach den in der Praxis üblichen Methoden untersucht:
- Reißfestigkeit, Reißdehnung und Spannungswerte gemäß DIN 53504
- Härte Shore A nach DIN 53505
- Rückprallelastizität nach DIN 53512
- Ausreißkraft und Bedeckungsgrad bei Stahlcordhaftungsprüfung.

Besonders wichtig sind die Ergebnisse der zuletzt erwähnten Haftungsprüfung, die nach einer Versuchsanordnung gemäß der Empfehlung des Normenausschusses mit der Bezeichnung ISO DP 56003.3 durchgeführt wurde. Hierzu wurde in besonderen Formkörpern Stahlcord der Konstruktion 4 x 0,25 mit einem Kupfergehalt der Messingauflage von 67 % in die Haftmischung eingebettet und diese dann vulkanisiert. Danach erfolgte eine Lagerung der Proben bei verschiedenen Versuchsbedingungen und anschließend die Messung der zum Herausreißen der Stahlcordfäden aus der Gummimischung erforderlichen Kraft. Als Meßergebnis wird der jeweils aus 10 Einzelprüfungen berechnete Mittelwert für die Ausreißkraft des Stahlcords aus dem Vulkanisat angegeben und außerdem der Bedeckungsgrad subjektiv beurteilt. Hierunter ist die am herausgezogenen Cord mit Gummi bedeckte Fläche zu verstehen, die subjektiv in Abstufungen von 10 % abgeschätzt wird (d.h. Abstufung 1,2,3....10 bedeutet 10,20,30....100% bedeckte Cordfläche). Somit geht die Haftfestigkeit der Gummimischung am Stahlcord mit höheren Prüfwerten sowohl mit der Ausreißkraft als auch mit dem Bedeckungsgrad einher.

Wie aus den Ergebnissen der Tabelle 1 zu ersehen ist, erreichen die mit den erfindungsgemäßen Produkten nach Beispiel 13, 15 und 16 hergestellten Gummimischungen höhere Bedeckungsgrade als der Vergleich mit Resorcin. Insbesondere bei einer Hitzealterung von 14 Tagen bei 90°C verzeichnet die Vergleichsmischung mit Resorcin einen Abfall von 80 % auf ca. 50 %, während sich die mit den Copolymerisaten hergestellten Mischungen um höchstens 10 % auf Bedeckungsgrade von 70 bis 90 % verändern. Wird die Vulkanisationsdauer zur Simulation von ungünstigen Praxisverhältnissen auf den dreifachen Wert erhöht, dann treten noch stärkere Unterschiede zwischen dem Vergleich und den erfindungsgemäßen Mischungen zutage. Der Bedeckungsgrad vor einer zusätzlichen Temperaturbelastung fällt bei der Resorcin-haltigen Mischung auf ca. 40 %, während die erfindungsgemäßen Mischungen 70 bis 100 % erreichen. Nach einer Hitzealterung bei 90°C im Verlaufe von 14 Tagen fallen die letzteren auf Bedeckungsgrade von 60 bis 90 % ab und sind damit deutlich besser als der Vergleich mit ca. 30 %.

**Tabelle 1**

| | | Mischung,hergestellt mit Polymerisat nach Beispiel | | | Vergleichsmischung mit Resorcin |
|---|---|---|---|---|---|
| | | 13 | 15 | 16 | |
| Zusatzmenge Copolymer bzw. Resorcin (GT) | | 2,5 | 2,5 | 2,5 | 2,5 |
| Zusatzmenge Melaminharz* (GT) | | 3,85 | 3,85 | 3,85 | 3,85 |
| Vulkanisation bei 145°C (min) | | 60 | 60 | 60 | 60 |
| Reißfestigkeit (MPa) | | 17 | 18 | 19 | 16 |
| Reißdehnung (%) | | 380 | 390 | 410 | 400 |

| Spannungswert: | | | | | |
|---|---|---|---|---|---|
| bei 10 % Dehnung (MPa) | | 1,1 | 1,0 | 1,1 | 0,9 |
| 50 % Dehnung (MPa) | | 2,2 | 1,9 | 2,0 | 1,7 |
| 100 % Dehnung (MPa) | | 3,5 | 3,2 | 3,3 | 2,7 |
| Rückprallelastizität (DIN 53512) | | 41 | 41 | 40 | 38 |
| Härte Shore A (DIN 53505) | | 67 | 66 | 68 | 72 |
| Ausreißkraft (N cm⁻¹)/Bedeckungsgrad nach Lagerung | 3 d / 23°C | 370/9 | 390/8 | 380/9 | 400/8 |
| | 14 d / 90°C | 180/9 | 170/7 | 190/8 | 220/5 |
| 3-fache Zeit vulkanisiert nach Lagerung | 3 d / 23°C | 310/10 | 320/8 | 350/7 | 330/4 |
| | 14 d / 90°C | 200/9 | 170/6 | 190/7 | 190/3 |

| | | | | | |
|---|---|---|---|---|---|
| * 65 GT Hexamethoxymethylmelamin auf 35 GT Kieselsäure | | | | | |

## Patentansprüche

1. Verwendung von Polymeren, die Einheiten der Formel (I) 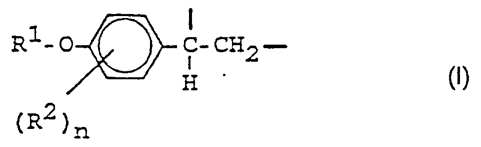 enthalten, als Verstärkerharze und Haftungspromotoren in Kautschukmischungen, wobei die Symbole R¹, R² und n in Formel (I) folgende Bedeutung haben:
R¹ ist Wasserstoff oder CH₃CO-, wobei
R¹ nicht in allen Einheiten der Formel (I) Wasserstoff ist,
R² ist Wasserstoff oder eine Alkyl- oder Alkoxygruppe mit 1 bis 4 C-Atomen oder Halogen oder -C≡N und
n ist eine ganze Zahl von 1 bis 4 mit der Maßgabe, daß für den Fall, daß n>1 ist, die Reste R² gleich oder verschieden sein können, und daß mindestens bei einem Teil der Einheiten der Formel (I) in mindestens einer der zu der R¹-O-Gruppe vicinalen Stellungen ein Wasserstoffatom steht,
und die Kautschukmischungen zusätzlich eine wirksame Menge eines Härtungsmittels zur Vernetzung der die Formel-I-Einheiten enthaltenden Polymeren bei der Kautschukvulkanisation enthalten.

2. Ausführungsform nach Anspruch 1, dadurch gekennzeichnet, daß das Polymer aus Einheiten besteht, bei denen R¹ eine Acetylgruppe, R² Wasserstoff und n = 4 ist.

3. Ausführungsform nach Anspruch 1, dadurch gekennzeichnet, daß das Polymer aus einem Gemisch von Einheiten, bei denen R¹ Wasserstoff ist, und von Einheiten, bei denen R¹ CH₃CO- ist, besteht, R2 Wasserstoff und n = 4 ist.

4. Ausführungsform nach Anspruch 1, dadurch gekennzeichnet, daß das Polymer ein Mischpolymerisat ist, das Einheiten der Formel I enthält und daneben Einheiten, die sich von Monomeren der allgemeinen Formel (II) 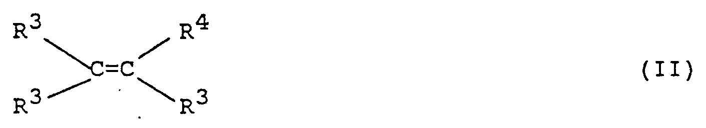 ableiten, worin die Symbole folgende Bedeutung haben:
R³ sind gleiche oder verschiedene Reste aus der Gruppe Wasserstoff oder eine Alkyl- oder Alkoxygruppe mit 1 bis 4 C-Atomen oder Halogen oder -C≡N oder -COOH oder -COO(C₁-C₄-Alkyl) oder 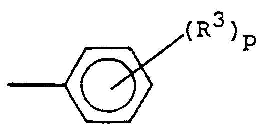 in der p eine ganze Zahl von 1 bis 5 ist,
und
R⁴ = R³ oder eine Gruppe

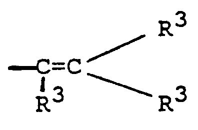

5. Ausführungsform nach Anspruch 4, dadurch gekennzeichnet, daß Copolymerisate verwendet werden, die Einheiten des 4-Hydroxy- und/oder des 4-Acetoxystyrols und des Butadiens enthalten.

6. Ausführungsform nach Anspruch 5, dadurch gekennzeichnet, daß das Copolymerisat ein mittleres Molekulargewicht M_{w} von höchstens etwa 150000 aufweist.

7. Ausführungsform nach Anspruch 1, dadurch gekennzeichnet, daß Copolymerisate verwendet werden, die Einheiten enthalten, die sich von Cyclopentadien oder Dicyclopentadien ableiten.

## Claims

1. The use of polymers which contain units of the formula (I) 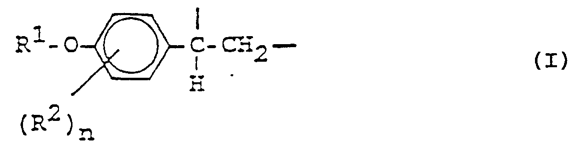 as reinforcing resins and adhesion promoters in rubber mixtures, the symbols R¹, R² and n in formula (I) having the following meaning:
R¹ is hydrogen or CH₃CO-, although
R¹ is not hydrogen in all units of the formula (I),
R² is hydrogen or an alkyl or alkoxy group having 1 to 4 carbon atoms or halogen or -C≡N and
n is an integer from 1 to 4, with the proviso that if n > 1 the radicals R² can be identical or different, and that at least in some of the units of the formula (I) there is a hydrogen atom in at least one of the positions vicinal to the R¹-O-group,
and the rubber mixtures additionally contain an effective amount of a curing agent for crosslinking the polymers containing the formula I units during the rubber vulcanization.

2. The embodiment as claimed in claim 1, wherein the polymer comprises units in which R¹ is an acetyl group, R² is hydrogen and n = 4.

3. The embodiment as claimed in claim 1, wherein the polymer comprises a mixture of units in which R¹ is hydrogen and of units in which R¹ is CH₃CO-, R2 is hydrogen and n = 4.

4. The embodiment as claimed in claim 1, wherein the polymer is a mixed polymer that contains units of the formula I, and, in addition, units which are derived from monomers of the formula (II) 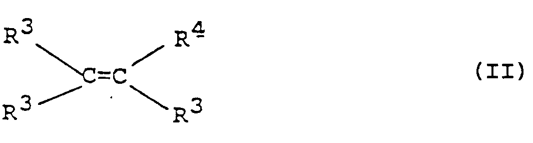 in which the symbols have the following meaning:
R³ are identical or different radicals from the group comprising hydrogen or an alkyl or an alkoxy group having 1 to 4 carbon atoms or halogen or -C≡N or -COOH or -COO(C₁-C₄-alkyl) or 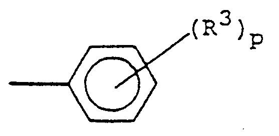
in which p is an integer from 1 to 5,
and
R⁴ = R³ or a group

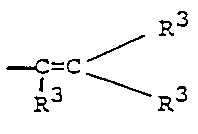

5. The embodiment as claimed in claim 4, wherein copolymers are used which contain units of 4-hydroxystyrene and/or of 4-acetoxystyrene and of butadiene.

6. The embodiment as claimed in claim 5, wherein the copolymer has an average molecular weight M_{w} of not more than about 150,000.

7. The embodiment as claimed in claim 1, wherein copolymers are used which contain units which are derived from cyclopentadiene or dicyclopentadiene.

## Revendications

1. Emploi de polymères à motifs de formule I ci-dessous : 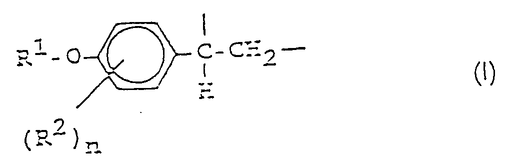 comme résines de renforcement et activants d'adhérence dans des mélanges de caoutchoucs, formule dans laquelle
R¹ désigne l'hydrogène ou le groupe CH₃CO-, mais n'étant pas l'hydrogène dans tous les motifs,
R² l'hydrogène ou bien un alkyle ou un alcoxy ayant de 1 à 4 atomes de carbone ou encore un halogène ou le groupe -C≡N, et
n un entier de 1 à 4, avec les conditions que si n > 1, les radicaux R² puissent être identiques ou différents les uns des autres, et que pour au moins une partie des motifs de formule I il y ait un atome d'hydrogène à l'une au moins des positions voisines du groupe R¹-O-,
et les mélanges de caoutchoucs contiennent en outre une proportion appropriée d'un agent durcissant pour réticuler les polymères à motifs de formule I dans la vulcanisation des caoutchoucs.

2. Forme de réalisation selon la revendication 1, caractérisée en ce que le polymère est formé de motifs dans lesquels R¹ est un groupe acétyle, R² l'hydrogène et n = 4.

3. Forme de réalisation selon la revendication 1, caractérisée en ce que le polymère est formé de motifs dans lesquels R¹ est l'hydrogène et de motifs dans lesquels R¹ est le groupe CH₃CO-, R² est l'hydrogène et n = 4.

4. Forme de réalisation selon la revendication 1, caractérisée en ce que le polymère est un copolymère de motifs de formule I et d'autres motifs de monomères de formule II 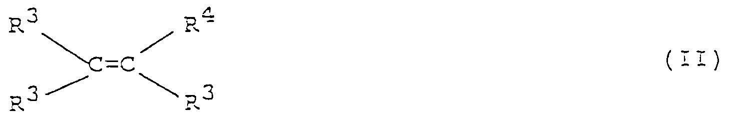 dans laquelle
les radicaux R³, identiques ou différents les uns des autres, sont pris parmi l'hydrogène, des alkyles et alcoxy ayant de 1 à 4 atomes de carbone, des halogènes, les groupes -C≡N et -COOH, des groupes -COO(C₁-C₄-alkyles) et un groupe 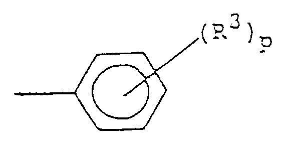 p étant un entier de 1 à 5, et
R⁴ est identique à R³ ou est un groupe

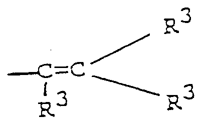

5. Forme de réalisation selon la revendication 4, caractérisée en ce que le copolymère comprend des motifs du 4-hydroxy- et/ou du 4-acétoxy-styrène et du butadiène.

6. Forme de réalisation selon la revendication 5, caractérisée en ce que le copolymère a une masse moléculaire moyenne Mm d'au maximum 150 000 environ.

7. Forme de réalisation selon la revendication 1, caractérisée en ce que le copolymère comprend des motifs de cyclopentadiène ou de dicyclopentadiène.
